# EUROPÄISCHE PATENTSCHRIFT

(11) **EP 1 581 380 B1**
(45) Veröffentlichungstag und Bekanntmachung des Hinweises auf die Patenterteilung: **07.03.2007**
(21) Anmeldenummer: 03794753.8
(22) Anmeldetag: 15.09.2003
(51) Int. Cl.: B29C 70/08, B29C 70/34

(54) **STRUKTURBAUTEIL AUS FASERVERSTÄRKTEM THERMOPLASTISCHEM KUNSTSTOFF**
STRUCTURAL COMPONENT CONSISTING OF FIBRE-REINFORCED THERMOPLASTIC
ELEMENT STRUCTUREL EN MATIERE THERMOPLASTIQUE RENFORCEE PAR DES FIBRES

(30) Priorität: 15.09.2002 CH 156702
(43) Veröffentlichungstag der Anmeldung: 05.10.2005
(73) Patentinhaber: Weber Technology AG, 8700 Küsnacht (CH)
(72) Erfinder: ZIEGLER, Stefan, CH-8005 Zürich (CH); RÜEGG, Andreas, CH-8055 Zürich (CH)
(86) Internationale Anmeldenummer: PCT/CH2003/000621
(87) Internationale Veröffentlichungsnummer: WO 2004/024424

(56) Entgegenhaltungen:
- WO-A-99/52703

## Beschreibung

Die Erfindung betrifft ein Strukturbauteil aus langfaserverstärktem thermoplastischem Kunststoff mit integrierten Endlosfaser-Verstärkungen gemäss Oberbegriff von Anspruch 1.

Solche bekannten Strukturbauteile weisen meist flächige Endlosfaser-Verstärkungen z.B. mit Gewebe-Halbzeugen oder mit Sandwich-Aufbau auf, die jedoch sehr eingeschränkt sind bezüglich möglicher Formgebungen und Anwendungen. Es sind auch Strukturbauteile mit integrierten Endlosfaser-Strängen bekannt geworden. Die WO99/52703 offenbart ein Strukturbauteil mit einer formbildenden langfaserverstärkten thermoplastischen Matrix und mit einer integrierten Tragstruktur aus Endlosfaser-Strängen. Dabei sind die Endlosfaser-Stränge durch flächige Verbindungsstellen miteinander verbunden. Dies ergibt jedoch nur einfache, flächige Tragstrukturen und keine räumlich ausgebildeten Endlosfaser-Verstärkungsstrukturen zur optimalen Aufnahme und Übertragung von dreidimensional angreifenden Lasten und Kräften.

Es ist daher Aufgabe der vorliegenden Erfindung, die Nachteile und Beschränkungen der bekannten Strukturbauteile zu überwinden und ein Strukturbauteil mit einer leichten Endlosfaser-Verstärkungsstruktur zu schaffen, welches eine dreidimensionale Abstützung und Weiterleitung von aufzunehmenden Lasten und Kräften mit optimaler Anpassung an die Kraftverläufe ermöglicht für einen weiten Bereich von Anwendungen.

Diese Aufgabe wird erfindungsgemäss gelöst durch ein Strukturbauteil nach Anspruch 1, mit einer integrierten dreidimensionalen Kreuzungsstelle, welche aus mehreren einzelnen, geformten Endlosfaser (EF)-Profilen in einer Langfaser-Thermoplast(LFT)-Masse gebildet wird.

Die abhängigen Patentansprüche betreffen vorteilhafte Weiterbildungen der Erfindung bezüglich optimaler dreidimensionaler Gestaltung der Endlosfaser-Verstärkungsstruktur und Anwendbarkeit in einer Vielzahl von Anwendungen mit optimalen mechanischen Eigenschaften zur Aufnahme von Lasten in beliebigen Richtungen. Dies ergibt leichte, einfach herstellbare Strukturbauteile, z.B. für Transportmittel, Fahrzeuge und Fahrzeugkomponenten mit tragenden Funktionen.

Im Folgenden wird die Erfindung anhand von Ausführungsbeispielen und Figuren weiter erläutert, dabei zeigen:
- Fig. 1a: ein erfindungsgemässes Strukturbauteil mit einer dreidimensionalen Kreuzungsstelle von mehreren EF-Profilen,
- Fig. 1b, c: Schnitte durch eine räumliche Kreuzungsstelle in verschiedenen Ansichten,
- Fig. 2: ein weiteres Beispiel einer räumlichen Kreuzungsstelle mit variablen Profilquerschnitten,
- Fig. 3a: eine "X"-förmige Kreuzungsstelle,
- Fig. 3b: eine "T"-förmige Kreuzungsstelle,
- Fig. 3c: eine "L"-förmige Kreuzungsstelle,
- Fig. 4: eine "T" oder "X"-förmige Moment-Lasthebel-Struktur,
- Fig. 5: eine "L"-förmige Moment-Lasthebel-Struktur,
- Fig. 6: Beispiele von dreidimensionalen Profilformgebungen,
- Fig. 7a, b: zwei verschiedene Querschnittsformen eines EF-Profils in einer Rippe,
- Fig. 8a: eine Anordnung von mehreren EF-Profilen in einer 2/3 Rücksitzlehne mit räumlicher Kreuzungsstelle,
- Fig. 8b: die LFT-Formgebung des Bauteils mit den integrierten EF-Profilen,
- Fig. 9: eine Einzelsitzlehne mit räumlichen Kreuzungsstellen,
- Fig. 10: eine Anordnung von EF-Profilen als Sitzschale oder Kabinenboden,
- Fig. 11: eine Autotür-Struktur,
- Fig. 12: ein Beispiel eines zweischaligen Bauteils.

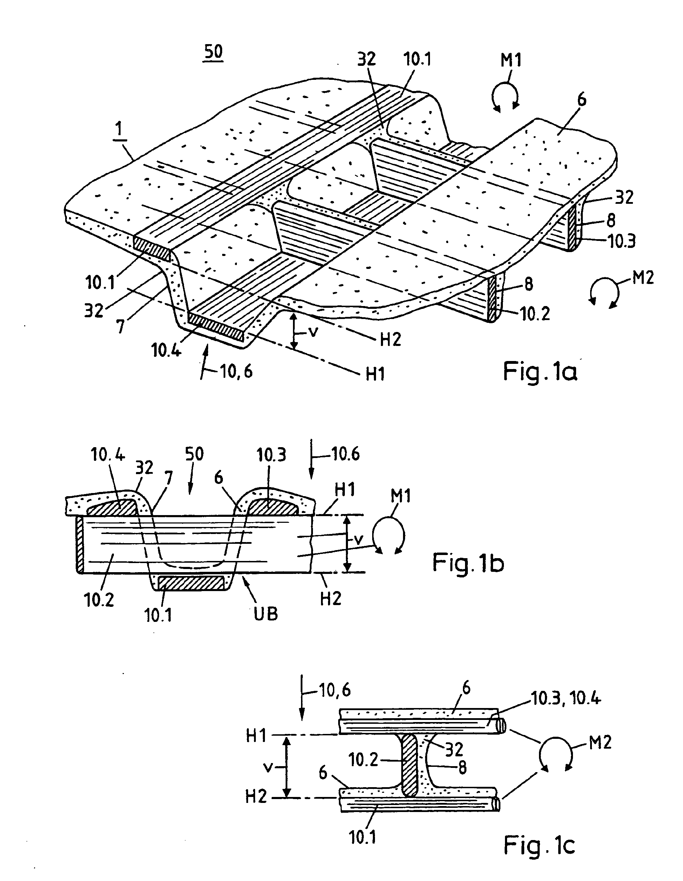

Fig. 1a zeigt ein erfindungsgemässes Strukturbauteil mit einer dreidimensionalen (räumlichen) Kreuzungsstelle 50. Das Bauteil besteht aus einer formbildenden LFT-Masse 6 (aus langfaserverstärktem Thermoplast) mit einer Endlosfaser(EF)-Verstärkung, bestehend aus mehreren einzelnen, integrierten und definiert geformten EF-Profilen 10, welche den aufzunehmenden Kräften und Lasten entsprechend geformt und im Bauteil einzeln genau positioniert angeordnet sind. Die dreidimensionale Kreuzungsstelle 50 weist eine obere und eine untere Hauptebene H1, H2 auf mit einem vertikalen Abstand v. Sie wird gebildet durch mindestens drei EF-Profile, welche an der Kreuzungsstelle zusammenlaufen bzw. sich kreuzen, und durch die alle diese Profile verbindende LFT-Masse 6. Dabei muss mindestens je ein EF-Profil in der oberen Hauptebene H1 (hier das Profil 10.1) und ein EF-Profil in der unteren Hauptebene H2 liegen (hier das Profil 10.4). Und zwischen den EF-Profilen der oberen und unteren Hauptebene muss mindestens ein weiteres EF-Profil, hier die Profile 10.2 und 10.3, mit einer vertikalen Ausrichtung, bzw. einer Ausdehnung in vertikaler Richtung, durchlaufen, um ein Moment M2 abzustützen. Alle EF-Profile sind an der Kreuzungsstelle durch die LFT-Masse 6 kraftübertragend miteinander verbunden (UB) durch entsprechende Ausformungen 32 der LFT-Masse, bzw. durch gegenseitige formmässige Abstimmung aufeinander von EF-Profilen und LFT-Masse.
Im Beispiel von Fig. 1a liegen die EF-Profile 10.1, 10.4 in einer Sicke 7 und die EF-Profile 10.2 und 10.3 in Rippen 8. So werden Kräfte F, Momente M und Lasten L, die in unterschiedlichen Richtungen auf ein Strukturbauteil einwirken, durch die EF-Profile aufgenommen und an der räumlichen Kreuzungsstelle 50 übertragen. Insbesondere können Momente an der Kreuzungsstelle von einem Profilpaar auf das andere übertragen werden. Hier bilden die EF-Profile 10.1 und 10.4 mit der Sicke 7 einen Biegeträger und die Profilpaare 10.2 und 10.3 in der Rippenstruktur 8 einen zweiten Biegeträger.
Damit werden z.B. die Momente M1 und M2 aufgenommen und je übertragen. Ein wesentlicher Vorteil dieser erfindungsgemässen Anordnung der EF-Profile an der räumlichen Kreuzungsstelle liegt darin, dass sie aus einem Bauteil besteht und nicht aus mehreren Bauteilen zusammengesetzt werden muss. Dazu können gemäss Beispiel die EF-Profile nacheinander oder miteinander in ein LFT-Formwerkzeug eingelegt werden und anschliessend mit einer eingebrachten, geschmolzenen LFT-Masse in einer LFT-Presse in einem Schritt und zu einem einteiligen Bauteil verpresst werden.

Die Ablagereihenfolge ist hier folgende: Zuerst wird das EF-Profil 10.1 in die untere Hauptebene H2, dann die EF-Profile 10.2 und 10.3 im vertikalen Zwischenbereich v und darauf das EF-Profil 10.4 in der oberen Hauptebene H1 abgelegt und anschliessend wird die geschmolzene LFT-Masse darauf gelegt und mit den EF-Profilen verpresst. Diese Fig. 1a zeigt ein Bauteil, welches nach dem Verpressen im LFT-Werkzeug umgekehrt wurde, so dass H1 unten und H2 in der Figur oben liegen. So sind die EF-Profile gut sichtbar. Die Richtung, in der die EF-Profile 10 und die LFT-Masse 6 eingelegt werden, ist mit einem Pfeil angegeben.

Die Fig. 1b, 1c zeigen zwei Schnitte durch ein weiteres Beispiel einer dreidimensionalen Kreuzungsstelle 50 mit zwei EF-Profilen 10.3, 10.4 in der oberen Haupteben H1, einem EF-Profil 10.1 in der unteren Haupteben H2 sowie einem EF-Profil 10.2 in einer Rippe 8 im vertikalen Bereich v dazwischen. Die EF-Profile 10.1, 10.3, 10.4 liegen in einer Sicke 7, welche die Rippe 8 kreuzt. Die Lage des Bauteils ist hier so gezeigt, wie es im LFT-Werkzeug liegt.
Die Fig. 1b zeigt den Querschnitt durch die Sicke 7, (welche das Moment M1 aufnimmt) und die Fig. 1c den Querschnitt durch die Rippe 8, (welche das Moment M2 aufnimmt).

Zur optimalen Kraftübertragung von EF-Profilen 10 auf die LFT-Masse 6 und von einem EF-Profil (10.1) über die LFT-Masse auf andere EF-Profile (10.3, 10.4) weist die LFT-Masse verbindende Ausformungen 32 auf. Durch die Anordnung der EF-Profile und die Ausformungen 32 der LFT-Masse wird die gewünschte Kraftübertragung UB an der räumlichen Kreuzungsstelle 50 geschaffen.

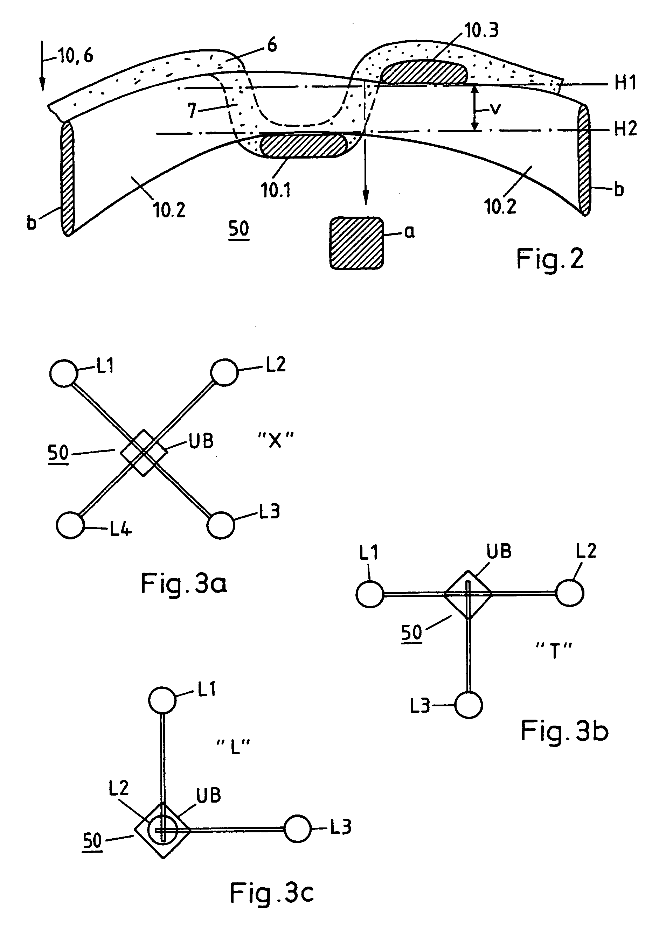

Die Fig. 2 zeigt ein weiteres Beispiel einer räumlichen Kreuzungsstelle in einem Bauteil, das als gekrümmte Schale ausgebildet ist. Die Hauptebenen H1 und H2 bilden hier Tangentialebenen an der Kreuzungsstelle 50. Der gegebene mögliche vertikale Abstand v zwischen H 1 und H2 sei hier aus Platzgründen relativ klein. Dann kann das die flachen EF-Profile 10.1 und 10.3 kreuzende EF-Profil 10.2 im Bereich v an der Kreuzungsstelle eine reduzierte Höhe mit z.B. quadratischem Querschnitt a aufweisen und neben der Kreuzungsstelle 50 wieder in einen flachen, vertikal ausgerichteten Querschnitt b übergehen. Wichtig ist, dass die EF-Profile im v-Bereich eine vertikale Ausdehnung aufweisen zwecks Momentübertragung. D.h. die EF-Profile 10 können eine im Prinzip beliebige dreidimensionale Formgebung und Lage aufweisen, welche den Lastverhältnissen und den Kraftverläufen optimal angepasst ist.

Die Fig. 3a, b, c illustrieren schematisch verschiedene mögliche Arten von dreidimensionalen Kreuzungsstellen. Anspruchsvolle Strukturbauteile müssen mehrere Lasten L, Kräfte F und Momente M, die an verschiedenen Stellen des Bauteils und in unterschiedlichen Richtungen angreifen, aufnehmen und weiterleiten können. Die erfindungsgemässen dreidimensionalen Kreuzungen 50 können dazu durch entsprechende Anordnungen der EF-Profile im Prinzip beispielsweise "X"-, "T"- oder "L"-förmig ausgebildet sein.

Die Fig. 3a zeigt dazu eine "X"-förmige Kreuzungsstelle mit Lastaufnahmen an den Stellen L1 bis L4 und mit den Kraftübertragungen UB an der Kreuzungsstelle 50.

Fig. 3b zeigt eine "T"-förmige Kreuzungsstelle mit Lastaufnahmen an den Stellen L1, L2, L3 und mit den Kraftübertragungen UB an der Kreuzungsstelle.

Fig. 3c zeigt eine "L"-förmige Kreuzungsstelle mit den Lastaufnahmen L1, L2, L3 und an der Stelle L2 auch mit den Kraftübertragungen UB an der Kreuzungsstelle.

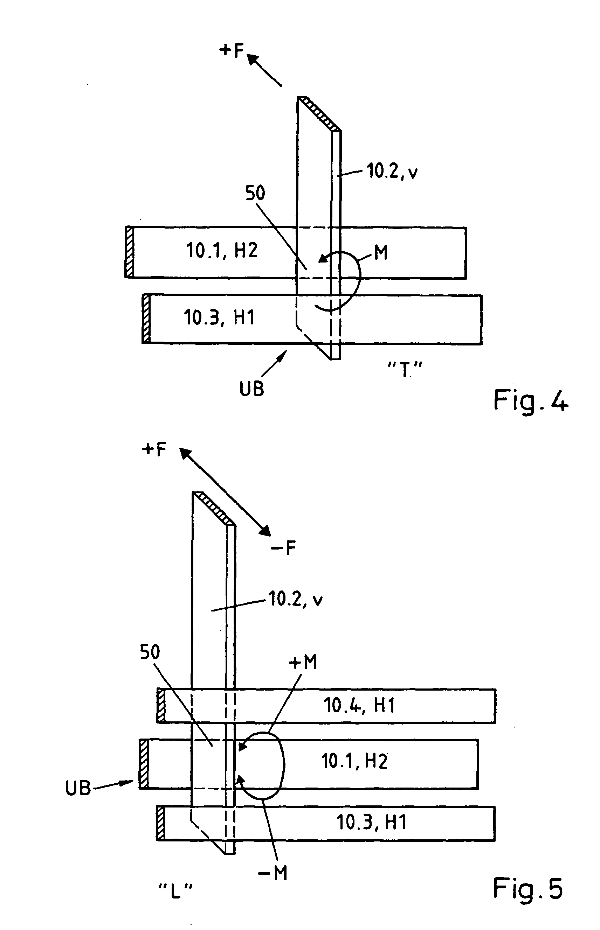

Die Fig. 4, 5 zeigen Beispiele von Moment-Lasthebel-Strukturen, die durch die Anordnung der EF-Profile mit der Kreuzungsstelle 50 gebildet werden.

Fig. 4 zeigt eine Moment-Lasthebel-Struktur mit einer "T"- oder "X"-förmigen Kreuzungsstelle 50. Damit wird eine Kraft +F als Hauptlastrichtung abgestützt und aufgenommen durch ein EF-Profil 10.2 als vertikal orientiertes Profil v, z.B. in einer Rippe, zwischen zwei horizontalen EF-Profilen 10.1 in der unteren Hauptebene H2 und 10.3 in der oberen Hauptebene H1. Die Kraft F ergibt ein Moment M, welches durch die EF-Profile 10.1, 10.3 in einer passenden Ausformung des LFT-Werkzeugs, z.B. in einer Sicke, abgestützt werden.

Fig. 5 zeigt eine "L"-förmige Moment-Lasthebel-Struktur, welche als Hauptlastrichtungen die Kräfte +F, -F (d.h. in beiden Richtungen) abstützt. Sie enthält wiederum ein vertikal orientiertes Profil 10.2 im Bereich v, das abgestützt wird durch drei EF-Profile z.B. an einer Sicke und in den Hauptebenen: das EF-Profil 10.1 in H2 und die EF-Profile 10.3 und 10.4 in H1. Damit werden die durch die Kräfte +F, -F resultierenden Momente +M, -M abgestützt und weitergeleitet.

Mit ihrer Formgebung entsprechen die EF-Profile den unterschiedlichen Funktionen und Anforderungen an verschiedenen Stellen eines EF-Profils bzw. Bauteils. Sie können eine dreidimensionale Formgebung aufweisen und dazu in Längsrichtung eine Biegung, Drehung, Faltung und/oder eine Oberflächenstrukturierung aufweisen und sie können variierende, unterschiedliche Querschnittsformen aufweisen.

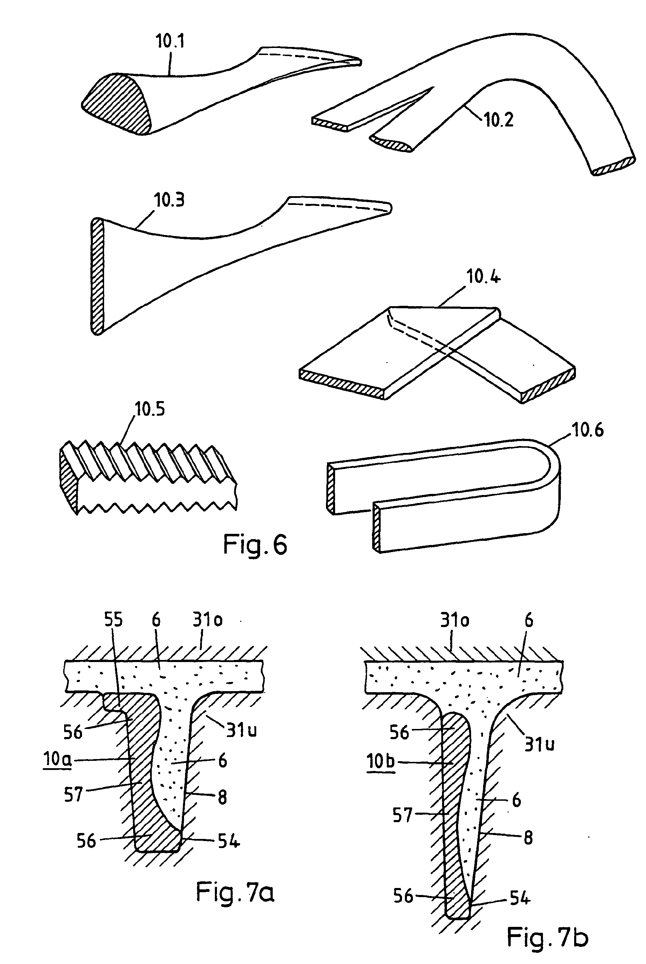

Die Fig. 6 zeigt Beispiele solcher möglicher Formgebungen der EF-Profile:
- Das EF-Profil 10.1 zeigt einen rundlichen Querschnitt, welcher abgeflacht und aufgefächert wird und dort eine grosse Anbindungsfläche an die umgebende LFT-Masse bildet (ebenso wie EF-Profil 10.5).
- Das EF-Profil 10.2 weist einen flachen Bogen auf und es ist an einem Ende aufgesplittet.
- Das EF-Profil 10.3 weist eine Verdrehung von flachem zu vertikal ausgerichtetem Querschnitt auf.
- Das EF-Profil 10.4 zeigt eine Faltung und
- das EF-Profil 10.5 eine strukturierte, zickzack-förmige, dadurch vergrösserte Oberfläche.
- Das EF-Profil 10.6 ist zu einer "U"-förmigen Doppelrippe gebogen. Dieses könnte z.B. anstelle von den zwei EF-Profilen 10.2 und 10.3 in Fig. 1a eingesetzt werden.

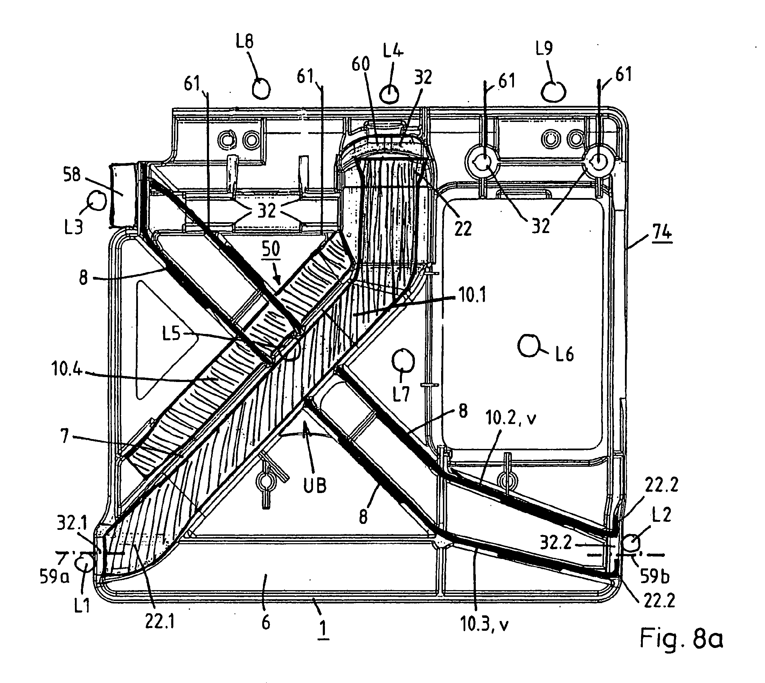

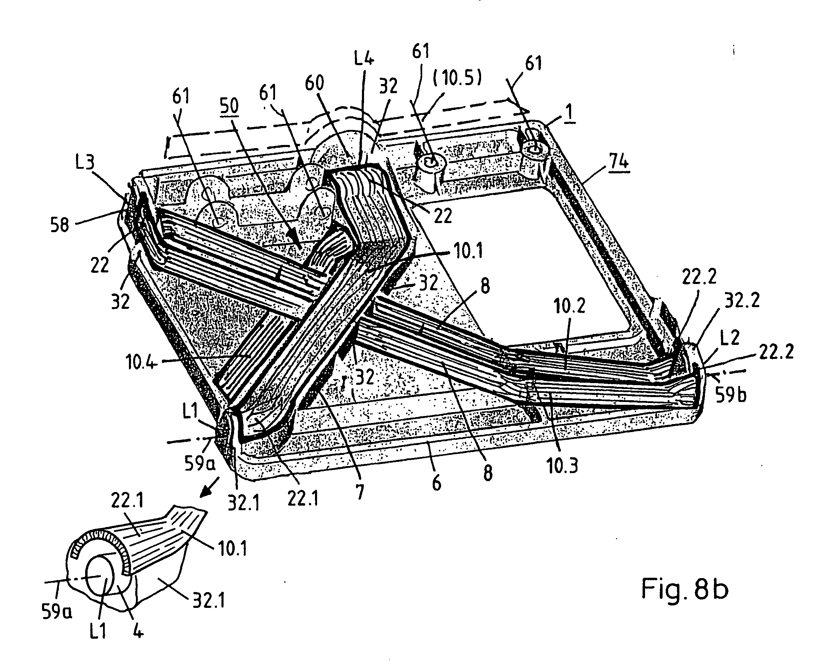

Die Fig. 7a, 7b illustrieren ein Beispiel eines EF-Profils 10, das über seine Länge unterschiedliche Querschnittsformen aufweist, in Anpassung an die zu übertragenden Kräfte und zur optimalen Verbindung mit der LFT-Masse 6. Die Figuren zeigen im Querschnitt ein EF-Profil 10a, 10b in einer Rippe 8, z.B. entsprechend den Profilen 10.2 oder 10.3 von Fig. 8, an zwei verschiedenen Stellen.

Fig. 7a zeigt eine Formgebung 10a mit einem Positionierabsatz 55 zum Fixieren und Halten des EF-Profils in der gewünschten Lage - speziell beim Verpressen, wenn die flüssige LFT-Masse 6 in die Rippe hinein gepresst wird. Oben und unten weist das EF-Profil je einen dickeren Bereich 56 als Zug- und Druckzonen (in Faserlängsrichtung) zur Übertragung von Momenten auf .Dazwischen liegt eine dünnere Schubzone 57 mit entsprechend dickerer anliegender LFT-Schicht 6 und mit grosser Anbindungstläche und besonders starker Interface-Verbindung. Dabei wird die Schubfestigkeit erhöht durch die anliegende LFT-Schicht 6 mit isotroper Faserverteilung (während die Festigkeit quer zur Faserrichtung in den EF-Profilen 10 hier tiefer liegt).

An einer anderen Stelle gemäss Fig. 7b ist der Profilquerschnitt 10b den dortigen Kraftverhältnissen entsprechend verändert: gestreckt, d.h. höher und schmaler und ohne Positionierabsatz.
Zur sicheren und genauen Positionierung und Fixierung der EF-Profile, auch während dem Verpressen mit der LFT-Masse, können weitere Positionierstellen 54 an den EF-Profilen ausgebildet sein, welche den Ausformungen des LFT-Werkzeugs 310 (oben) und 31 u (unten) entsprechen. Hier dient die Positionierstelle 54 der genauen Fixierung unten in der Rippe 8. Positionierstellen können auch in Längsrichtung der EF-Profile passend verteilt angeordnet werden.

In analoger Weise können solche Profilformen auch an Sickenwänden positioniert und fixiert sein, z.B. an den zwei Seitenwänden einer Sicke 7 - anstelle der zwei EF-Profile (10.2, 10.3) in zwei separaten Rippen 8 wie dies im nachfolgenden Beispiel von Fig. 8 gezeigt ist. Anstelle der Beispiele 7a, 7b können die Querschnitte von EF-Profilen ja nach Anwendung beispielsweise auch "L"-oder "Z"-förmig ausgebildet sein.

Die Fig. 8a, b zeigen das Beispiel eines komplexen Strukturbauteils mit einer dreidimensionalen Kreuzungsstelle in Form einer zweidrittel (2/3) Rücksitzlehne 74 mit einer Mittelgurtanbindung 60 für den mittleren Sitzplatz und einem Halteschloss 58 sowie mit mehreren anspruchsvollen Lasteinleitungen für verschiedene Lastfälle (Crash-Lasten). Die Fig. 8a zeigt im Grundriss die Anordnung der EF-Profile im Bauteil und Fig. 8b perspektivisch die LFT-Masse 6 und darin eingezeichnet die integrierten EF-Profile 10.1 bis 10.4. Dieses Beispiel illustriert die lastoptimierte Formgebung der EF-Profile selber sowie die lastoptimierte Anordnung zu einer Struktur mit entsprechender Formgebung der LFT-Masse 6 und mit optimalen Kraftübertragungen zwischen den Hauptlasten tragenden EF-Profilen (mit gerichteten Endlosfasern) und der ergänzenden LFT-Masse (mit ungerichteten Langfasern).

Hier ergeben sich vier Hauptlastaufnahmen L1 bis L4 durch:
- die Lasten L1, L2 an den beidseitigen Achshalterungen 59a, 59b, um welche die Rücksitzlehne 74 schwenkbar ist,
- die Last L3 am Schloss 58, zum Fixieren der Rücksitzlehne in Normalstellung und
- die Last L4 an Gurtschloss bzw. Gurtrolle 60 für den Mittelgurt des mittleren Sitzplatzes.

Mit diesem Strukturbauteil werden folgende Lastfälle (mit den weiteren Lasten L5 bis L9) abgedeckt:
- Front- und Heckaufprall
- Ladegut-Sicherung
- Gurtverankerung
- Kopfstützenverankerung

Zur Aufnahme und Übertragung aller Lasten und Kräfte bilden die sich kreuzenden EF-Profile zusammen mit den verbindenden kraftübertragenden Ausformungen der LFT-Masse die räumliche, dreidimensionale Kreuzungsstruktur 50. Hier bilden die EF-Profile je paarweise in den LFT-Ausformungen einen Momente übertragenden Biegeträger:
- die EF-Profile 10.1 und 10.4 in einer Sicke 7 der LFT-Masse einen Biegeträger zwischen den Lasten L1 und L4
- und die EF-Profile 10.2 und 10.3 in den Rippen 8 der LFT-Masse einen Biegeträger zwischen den Lasten L2 und L3.
Über die räumliche Kreuzungsstelle 50 wird dabei die Last L4 an der Gurtrolle 60 und auch weitere Lasten, die auf den Biegeträger 10.1/ 10.4 wirken, auch durch den anderen Biegeträger 10.2/ 10.3 abgestützt (und umgekehrt).

Die Hauptkräfte bzw. Lasten L1 bis L4 werden durch Krafteinleitungen aufgenommen:
- durch Ausformungen 22 und 32 der EF-Profilenden und der LFT-Masse zur Aufnahme der äusseren Kräfte mit oder ohne Inserts 4.
- Dabei können die Inserts 4 vor dem Verpressen in das LFT-Werkzeug eingelegt und mit den EF-Profilen und der LFT-Masse zusammen verpresst werden
- oder sie können auch nachträglich in das Bauteil eingefügt werden.

Hier weist das EF-Profil 10.1 eine bogenförmige Verbreiterung 22 und eine angepasste LFT-Ausformung 32.1 zur Aufnahme eines metallischen Inserts 4 beim Achslager 59a auf. Die andere Achslager-Aufnahme 59b wird durch Ausformungen 22.2 der EF-Profile 10.2 und 10.3 und verbindende Ausformungen 32.2 der LFT-Masse gebildet. Diese Profilenden 22.2 sind umgebogen und so in der LFT-Masse verankert zur Erhöhung der Zugfestigkeit. Das Schloss 58 wird an eine Schlossplatte am EF-Profil 10.3 angeschraubt und durch das EF-Profil 10.2 gestützt. Die Gurtrolle 60 wird abgestützt durch Ausformungen 22 der EF-Profile 10.1 und 10.4 und durch LFT-Ausformungen 32. Die kleineren Lasten L8, L9 von Kopfstützen 61 werden hier durch LFT-Ausformungen 32 aufgenommen. Es könnte aber auch ein zusätzliches quer verlegtes EF-Profil 10.5 (bereichsweise flach und vertikal ausgerichtet) zur Verstärkung integriert werden.

Die Ablagereihenfolge der EF-Profile in das LFT-Werkzeug ist:
zuerst das EF-Profil 10.1 (in H2), darauf die EF-Profile 10.2 und 10.3 und anschliessend darauf das EF-Profil 10.4 (in H1). Dann wird die flüssige LFT-Masse 6 eingebracht und das ganze Bauteil einschalig und einstückig in einem Schritt verpresst. (Das gezeigte Bauteil liegt umgekehrt im LFT-Formwerkzeug, d.h. dort liegt H2 unten und H1 oben. Die Fig. 8 zeigt die Rückseite der Rücksitzlehne 74.)
In diesem Beispiel ist auch die dreidimensionale Profilformung in vielen Varianten ersichtlich.

Die Formgebungen im Bauteil können spezielle Ausformungen 22 für Kraftübergänge und zur direkten Aufnahme von äusseren Lasten bzw. zur Aufnahme von Inserts 4 (Einbauteilen) aufweisen, an welchen äussere Lasten in das Bauteil eingeleitet werden. Auf die Formgebung der EF-Profile 10 abgestimmt wird auch die Formgebung der umgebenden LFT-Masse 6 gewählt. Formgebungen von Kraftübertragungen (von Kräften und Momenten) im Innern eines Bauteils (z.B. von einem EF-Profil über die LFT-Masse auf andere EF-Profile) können sowohl als Ausformungen 22 der EF-Profile als auch als Ausformungen 32 der LFT-Masse gebildet sein.
Generell werden möglichst ausgeglichene, stetige Übergänge ausgebildet zur Reduktion von Festigkeits- und Steifigkeitssprüngen zwischen EF-Profilen und LFT-Masse.

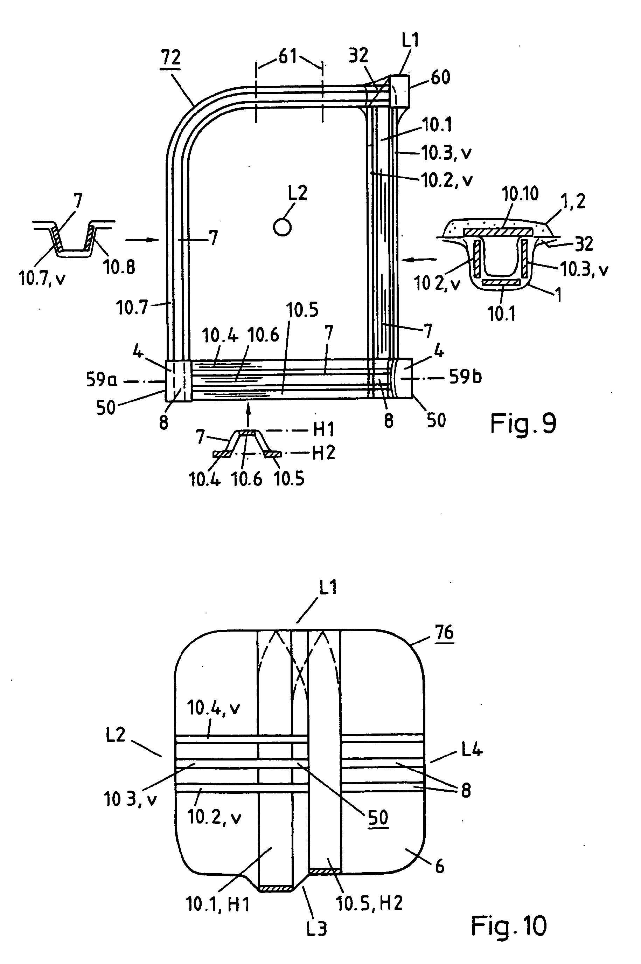

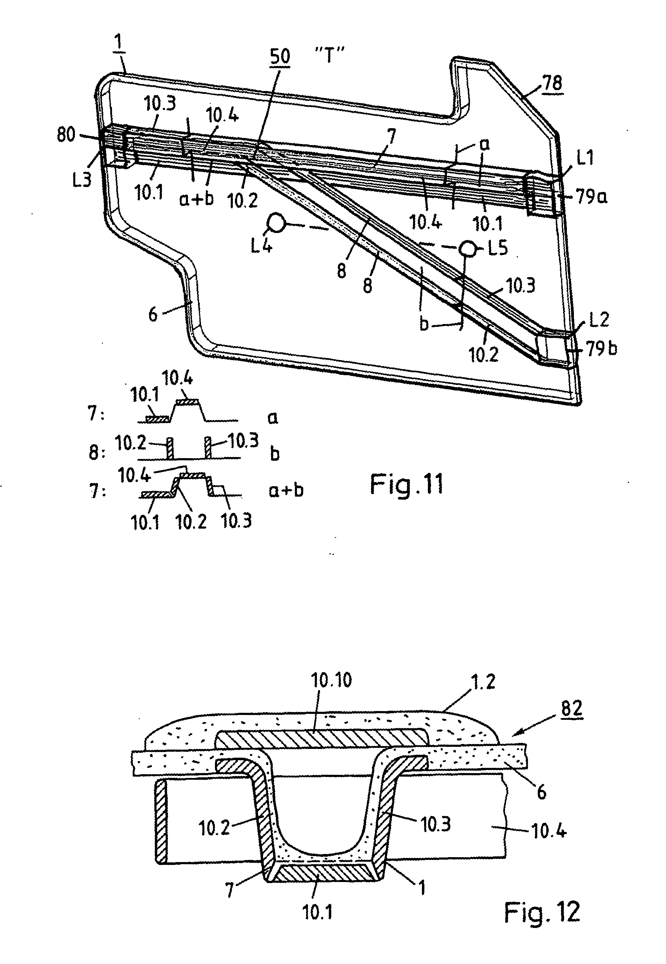

Fig. 9 zeigt eine Einzelsitzlehne 72 mit einer Gurtanbindung 60 und Kopfstützen 61 bei der ähnliche Lasten und Lastfälle auftreten wie im Beispiel von Fig. 8, hier mit den Hauptlasten L1 an der Gurtanbindung 60 und L2 dem Gewicht des Passagiers. Alle Lasten müssen jedoch durch die fixierbaren Achshalterungen 59b, und eventuell auch 59a, um welche die Sitzlehne schwenkbar eingestellt wird, abgestützt werden. Dabei kann die Arretierung beidseitig an 59b und 59a oder oft nur einseitig an 59b vorhanden sein. Im letzteren Fall muss ein aus EF-Profilen gebildeter Profilträger zwischen der Arretierung 59b und der Gurtanbindung 60 besonders stark ausgebildet sein mit erhöhter Torsionssteifigkeit. Dazu kann hier ein geschlossener Hohlprofilquerschnitt gebildet werden (analog zu Fig. 12) beispielsweise mit drei EF-Profilen 10.1, 10.2, 10.3 in einer Sicke 7 des Bauteils 1 und darauf kann zusätzlich ein separates Deckelbauteil 1.2 mit einem EF-Profil 10.10 thermoplastisch aufgeschweisst werden.

Der Profil-Träger zwischen den Achshalterungen und Arretierungen 59a und 59b weist hier die EF-Profile 10.4, 10.5, 10.6 in den Hauptebenen H1, H2 an einer Sicke 7 auf. Der Profil-Träger zwischen der Achshalterung 59a und der Gurtanbindung 60 ist gebogen und weist zwei vertikale EF-Profile 10.7, 10.8 z.B. in den Seitenwänden einer Sicke 7 auf. Es werden hier zwei räumliche Kreuzungsstellen 50 an den Achshalterungen 59a und 59b gebildet. Dabei sind hier alle EF-Profile in Sicken integriert, wobei an den Kreuzungsstellen der EF-Profile die Sicken lokal in Rippen übergehen, so dass dort immer eine Kreuzungsstelle zwischen einer Rippe 8 und einer Sicke 7 entsteht und so, dass alle EF-Profile in einem Schritt ablegbar sind und das Strukturbauteil 1 in einem Schritt einstückig verpresst werden kann. Natürlich können auch andere Anordnungen von EF-Profilen in Rippen und Sicken nach Bedarf kombiniert werden.

Fig. 10 zeigt eine Anordnung von EF-Profilen mit einer räumlichen Kreuzungsstelle 50, welche als Sitzschale 76 oder als Kabinenboden, z.B. einer Liftkabine, ausgebildet ist. Um hier eine Schale mit relativ geringer Dicke, d.h. kleinem vertikalem Abstand v zwischen den Hauptebenen H1, H2 zu realisieren, sind hier drei vertikale EF-Profile 10.2, 10.3, 10.4, v in einer Rippenstruktur integriert, die zwei EF-Profile 10.1, 10.5 in den Hauptebenen H1, H2 kreuzen. An einem freien Ende L1 einer Sitzschale könnten die EF-Profile 10.1 und 10.5 auch zusammenlaufen und dort direkt flächig miteinander verbunden sein. Mit den Lasten L2 - L4 (auch L1) wird diese Struktur abgestützt.

Fig. 11 zeigt ein Beispiel eines Strukturbauteils, das eine Tragstruktur einer Autotüre 78 bildet mit integriertem Seitencrash-Schutz. Die EF-Profil-Struktur mit einer "T"-förmigen Kreuzungsstelle 50 wird gebildet durch zwei an der Kreuzungsstelle zusammenlaufende Biegeträger mit EF-Profilen, welche die Kräfte abstützenden Laststellen L1 und L2 = oberes und unteres Türscharnier 79a und 79b sowie L3 = Türschloss 80 verbinden. Der Biegeträger a verbindet das obere Scharnier 79a mit dem Schloss 80 und der Biegeträger b das untere Scharnier 79b mit dem Schloss 80, wobei dieser an der Kreuzungsstelle 50 in den Biegeträger a einmündet und bis zum Schloss 80 weiterläuft (a + b). Die Anordnungen der EF-Profile 10.1, 10.4 des Biegeträgers a in einer Sicke 7 und die EF-Profile 10.2, 10.3 des Biegeträgers b in den Rippen 8 sowie die Kombination a + b mit allen vier EF-Profilen an der Sicke 7 sind in Schnitten dargestellt. Dies ergibt eine starke, leichte Verstärkungsstruktur um z.B. auch Seitencrash-Lasten L4, L5 aufzufangen und abzustützen.

Fig. 12 zeigt ein Beispiel eines Strukturbauteils 82, das mehrteilig, z.B. zweischalig, zusammengesetzt ist, z.B. durch Schweissen oder Kleben. Hier wird ein Strukturbauteil 1 mit Kreuzungsstelle mit einem weiteren Bauteil 1.2 verbunden, welches einen Deckel zu einer offenen Sicke bildet, so dass beide Bauteile 1 und 1.2 zusammen einen geschlossenen, rohrförmigen, EF-verstärkten Profilquerschnitt bilden mit besonders hoher Torsionssteifigkeit (wie als Variante in Fig. 9 erklärt ist). Solche zweiteiligen Bauteile werden vorzugsweise thermoplastisch zusammengeschweisst. Die Formgebung der vertikal orientierten EF-Profile 10.2 und 10.3 in den Seitenwänden der Sicke 7 können z.B. auch einen flachen Teil aufweisen, der dem EF-Profil 10.10 im Deckelbauteil 1.2 angepasst ist. Hinter diesen EF-Profilen 10.2, 10.3 könnte z.B. mit einem quer durchlaufendenden vertikalen EF-Profil 10.4 eine räumliche Kreuzungsstelle 50 gebildet werden.

Folgende Materialien eignen sich für die erfindungsgemässen Strukturbauteile: Die LFT-Masse 6 weist vorzugsweise eine mittlere Faserlänge von mindestens 3 mm, besser von 5 - 15 mm, auf. Die Endlosfaserverstärkung (EF) der EF-Profile kann aus gerichteten Glas-, Kohle- oder Aramidfasern in der Thermoplastmatrix bestehen (wobei in Spezialfällen auch Borfasern für höchste Druckfestigkeiten oder Stahlfasern nicht ausgeschlossen wären).

Die EF-Profile 10 können hauptsächlich aus DU (unidirektionale)-Lagen (0°), aber auch aus Lagen mit unterschiedlicher Faser-Ausrichtung aufgebaut sein, z.B. abwechselnd mit Lagen von 0°/90° oder 0°/+45°/-45° Faserorientierungen. Sie können auch eine dünne Oberflächenschicht (z.B. 0.1 - 0.2 mm) aus reinem Thermoplastmaterial ohne EF-Faserverstärkung aufweisen.

Speziell geeignet für Strukturbauteile sind teilkristalline Polymere wie Polypropylen (PP), Polyethylentherephtalat (PET), Polybutylentherephtalat (PBT) oder Polyamid (PA) als Matrix von EF-Profflen 10 und von LFT-Masse 6, z.B. da diese höhere Druckfestigkeiten aufweisen können. Es können aber auch amorphe Polymere wie ABS oder PC eingesetzt werden.

Im Rahmen dieser Beschreibung werden folgende Bezeichnungen verwendet:
- 1: Strukturbauteil
- 1.2: zweiter Teil (zweischalig)
- 4: Inserts, Einlagen
- 6: LFT-Masse, Formmasse
- 7: Sicke
- 8: Rippe
- 10: EF-Profile
- 22: EF-Profil-Ausformungen
- 32: LFT-Ausformungen
- 50: räumliche Kreuzungsstelle (dreidimensional)
- 54: Positionierstellen
- 55: Positionierabsatz
- 56: dicke Zug- und Druckzonen in 10
- 57: dünnere Schubzone
- 58: Schloss
- 59a, b: Achshalterungen
- 60: Gurtrolle, Gurtschloss
- 61: Kopfstützen
- 72: Einzelsitz
- 74: 2/3 Rücksitzlehne
- 76: Sitzschale, Kabinenboden
- 78: Autotüre
- 79: Türscharniere
- 80: Türschloss
- 82: zweischaliges Strukturbauteil
- LFT: Langfaser-Thermoplast
- EF: Endlosfaser
- H1: obere Hauptebene von 50
- H2: untere Hauptebene von 50
- v: Abstand zwischen H1 und H2 (vertikal)
- L: Lasten (K, M)
- F: Kräfte
- M: Momente
- UB: Kraftübertragung an 50
- "T"-, "L"-,"X"-förmige: Kreuzungsstelle

## Patentansprüche

1. Strukturbauteil (1) aus langfaserverstärktem thermoplastischem Kunststoff (LFT) mit integrierten Endlosfaser (EF)-Verstärkungen, **gekennzeichnet durch**
- mindestens drei einzelne integrierte, geformte Endlosfaser (EF) -Profile (10)
- die an einer Kreuzungsstelle zusammenlaufen,
- und eine räumliche dreidimensional ausgebildete Kreuzungsstelle (50) bilden,
- wobei an der Kreuzungsstelle mindestens je ein EF-Profil (10) in einer oberen und in einer unteren Hauptebene (H1, H2) der Kreuzungsstelle liegt und ein EF-Profil mit vertikaler Ausdehnung (v) zwischen diesen EF-Profilen der oberen und der unteren Hauptebene durchgehend verläuft
- und wobei die EF-Profile (10) **durch** die LFT-Masse (6) an der Kreuzungsstelle (50) kraftübertragend miteinander verbunden sind
- **durch** entsprechende Ausformungen (32) der LFT-Masse
- und wobei mehrere Kräfte (F) oder Momente (M) an mehreren Stellen auf die EF-Profile (10) abstützbar sind zur Aufnahme von äusseren Lasten (L).

2. Strukturbauteil nach Anspruch 1, **dadurch gekennzeichnet, dass** äussere Krafteinleitungen (L) mittels LFT-Ausformungen (32) und/oder mit entsprechenden EF-Profil-Ausformungen (22) gebildet sind.

3. Strukturbauteil nach Anspruch 1, **dadurch gekennzeichnet, dass** die räumlichen Kreuzungsstellen (50) "X"-, "T"- oder "L"-förmig ausgebildet sind.

4. Strukturbauteil nach Anspruch 1, **dadurch gekennzeichnet, dass** die EF-Profile an der Kreuzungsstelle (50) so angeordnet sind, dass die EF-Profile (10) nacheinander oder miteinander in ein LFT-Form-Werkzeug einlegbar sind und anschliessend mit einer eingebrachten, geschmolzenen LFT-Masse (6) in einer LFT-Presse in einem Schritt und zu einem einteiligen Bauteil verpressbar sind.

5. Strukturbauteil nach Anspruch 1, **dadurch gekennzeichnet, dass** die EF-Profile (10) aus Lagen mit unterschiedlichen Faserorientierungen aufgebaut sind.

6. Strukturbauteil nach Anspruch 1, **dadurch gekennzeichnet, dass** die LFT-Masse (30) eine mittlere Faserlänge von mindestens 3 mm aufweist.

7. Strukturbauteil nach Anspruch 1, **dadurch gekennzeichnet, dass** die EF-Profile (10) eine Endlosfaserverstärkung (EF) aus Glas-, Kohle- oder Aramidfasern aufweisen.

8. Strukturbauteil nach Anspruch 1, **dadurch gekennzeichnet, dass** das Thermoplastmaterial der LFT-Masse (6) und der EF-Profile (10) aus teilkristallinen Polymeren wie PP, PET, PBT, PA besteht.

9. Strukturbauteil nach Anspruch 1, **dadurch gekennzeichnet, dass** die EF-Profile (10) eine dreidimensionale Profilformgebung aufweisen.

10. Strukturbauteil nach Anspruch 1, **dadurch gekennzeichnet, dass** die EF-Profile (10.1 - 10.6) in Längsrichtung eine Biegung, Drehung, Faltung und/oder eine Oberflächenstrukturierung aufweisen.

11. Strukturbauteil nach Anspruch 1, **dadurch gekennzeichnet, dass** die EF-Profile (10) unterschiedliche Querschnittsformen aufweisen.

12. Strukturbauteil nach Anspruch 1, **dadurch gekennzeichnet, dass** Ausformungen (22) an den EF-Profilen und Ausformungen (32) der LFT-Masse für Krafteinleitungen und von Kraftübergängen zwischen EF-Profilen (10) und LFT-Masse (6) sowie zu Inserts (4) erzeugt werden.

13. Strukturbauteil nach Anspruch 1, **dadurch gekennzeichnet, dass** ein EF-Profil (10) mit einem Positionierabsatz (55), einem dicken Zug- und Druckbereich oben und unten (56) sowie einem dünneren Schubbereich (57) dazwischen geformt wird und das EF-Profil in einer Rippe (8) oder an einer Sickenwand (7) des Strukturbauteils positioniert ist.

14. Strukturbauteil nach Anspruch 1, **dadurch gekennzeichnet, dass** die EF-Profile (10) eine "Moment-Lasthebel-Struktur" mit einer "T"-förmigen oder "L"-förmigen räumlichen Kreuzungsstelle bilden.

15. Strukturbauteil nach Anspruch 1, **dadurch gekennzeichnet, dass** es eine Einzelsitzlehne (72) mit Gurtanbindung (60) bildet.

16. Strukturbauteil nach Anspruch 1, **dadurch gekennzeichnet, dass** es eine Zweidrittel-Rücksitzlehne (74) mit Gurtanbindung (60) und Halteschloss (58) bildet.

17. Strukturbauteil nach Anspruch 1, **dadurch gekennzeichnet, dass** es eine Sitzschale (76) oder einen Kabinenboden bildet.

18. Strukturbauteil nach Anspruch 1, **dadurch gekennzeichnet, dass** es eine Autotür-Tragstruktur (78) mit integriertem Seitencrash-Schutz bildet.

19. Strukturbauteil nach Anspruch 1, **dadurch gekennzeichnet, dass** es mehrteilig, z.B. zweischalig 1, 1.2, zusammengesetzt ist (82).

20. Verfahren zur Herstellung eines Strukturbauteils nach Anspruch 1 wobei
mehrere geformte EF-Profile (10) nacheinander oder miteinander in ein LFT-Formwerkzeug abgelegt und dort zur Bildung einer räumlichen Kreuzungsstelle (50) in vorgegebener Lage positioniert werden und anschliessend eine geschmolzene LFT-Masse (6) eingebracht und mit den EF-Profilen (10) zusammen in einem Schritt zu einem einstückigen Bauteil verpresst wird.

## Claims

1. Structural component (1) made of long-fibre reinforced thermoplastic material (LFT) with integrated continuous fibre (EF) - reinforcements,
**characterised by**
- at least three individually integrated, shaped continuous fibre (EF) - profiles (10),
- which run together at an intersection point,
- and which form a spatial three-dimensionally developed intersection point (50),
- wherein at the intersection point at least one EF - profile (10) respectively lies in an upper and in a lower main plane (H1, H2) of the intersection point and one EF - profile with vertical extension (v) extends continuously between these EF-profiles of the upper and the lower main plane
- and wherein the EF - profiles (10) are joined together by the LFT - mass (6) at the intersection point (50) in a force-transmitting manner
- by corresponding shapings (32) of the LFT - mass
- and wherein several forces (F) or moments (M) are capable of being supported on the EF - profiles (10) at several points for the absorption of external loads (L).

2. Structural component according to claim 1, **characterised in that** external force introductions (L) are formed by means of LFT - shapings (32) and/or with corresponding EF - profile shapings (22).

3. Structural component according to claim 1, **characterised in that** the three-dimensional intersection points (50) are developed as "X"-, "T"- or "L"-shaped.

4. Structural component according to claim 1, **characterised in that** the EF - profiles are arranged in such a manner at the intersection point (50), that the EF - profiles (10) are capable of being inserted into an LFT - shaping tool one after the other or together and subsequently are capable of being pressed together with an introduced, molten LFT - mass (6) in an LFT - press in a single step and into a one-piece component.

5. Structural component according to claim 1, **characterised in that** the EF - profiles (10) are built up out of layers with differing fibre orientations.

6. Structural component according to claim 1, **characterised in that** the LFT - mass (6) comprises an average fibre length of at least 3 mm.

7. Structural component according to claim 1, **characterised in that** the EF - profiles (10) comprise a continuous fibre reinforcement (EF) made out of glass -, carbon - or aramide fibres.

8. Structural component according to claim 1, **characterised in that** the thermoplastic material of the LFT - mass (6) and of the EF - profiles (10) consists of partially crystalline polymers such as PP, PET, PBT, PA.

9. Structural component according to claim 1, **characterised in that** the EF - profiles (10) comprise a three-dimensional profile shaping.

10. Structural component according to claim 1, **characterised in that** the EF - profiles (10.1 - 10.6) comprise a bend, a twist, a fold and/or a surface structuring in longitudinal direction.

11. Structural component according to claim 1, **characterised in that** the EF - profiles (10) comprise differing cross-sectional shapes.

12. Structural component according to claim 1, **characterised in that** shapings on the EF - profiles (22) and shapings (32) of the LFT - mass for force introductions and for force transmissions between the EF - profiles (10) and the LFT - mass (6) as well as to inserts (4) are provided.

13. Structural component according to claim 1, **characterised in that** an EF - profile (10) with a positioning shoulder (55), a thick tensile - and compressive force zone (56) on top and underneath as well as a thinner thrust zone (57) in between is formed, which is positioned in a rib (8) or in a crimp wall (7) of the structural component.

14. Structural component according to claim 1, **characterised in that** the EF - profiles (10) form a "moment- load lever structure" with a "T"-shaped or "L"-shaped three-dimensional intersection point.

15. Structural component according to claim 1, **characterised in that** it forms a single seat back (72) with a belt connection (60).

16. Structural component according to claim 1, **characterised in that** it forms a two-thirds rear seat back (74) with belt connection (60) and lock (58).

17. Structural component according to claim 1, **characterised in that** it forms a seat shell (76) or a cabin floor.

18. Structural component according to claim 1, **characterised in that** it forms a supporting structure of a car door (78) with integrated side-crash protection.

19. Structural component according to claim 1, **characterised in that** it is assembled out of several parts, e.g., two-shell 1, 1.2 (82).

20. Method for the manufacturing of a structural component according to claim 1, wherein several shaped EF - profiles (10) are deposited in an LFT - shaping tool one after another or together and for the formation of a three-dimensional intersection point (50) there are positioned in a given position and subsequently an LFT - mass (6) is introduced and together with the EF - profiles (10) is pressed into a one-piece component in a single step.

## Revendications

1. Elément structurel (1) en matière thermoplastique renforcée par des fibres longues (LFT) avec renforts intégrés à filaments continus (EF),
**caractérisé par**
- au moins trois profilés individuels moulés intégrés (10) à filaments continus (EF)
- qui se rejoignent à un point d'intersection,
- et qui forment un point d'intersection (50) conçu en trois dimensions dans l'espace,
- au moins un profilé EF (10) se trouvant au point d'intersection dans un plan principal supérieur et dans un plan principal inférieur (H1, H2) du point d'intersection et un profilé EF s'étendant en continu avec une étendue verticale (v) entre ces profilés EF du plan principal supérieur et du plan principal inférieur
- et les profilés EF (10) étant reliés les uns aux autres au point d'intersection (50) avec transmission de force par la masse LFT (6)
- par des déformations correspondantes (32) de la masse LFT
- et plusieurs forces (F) ou moments (M) pouvant être appuyés en plusieurs endroits sur les profilés EF (10) pour absorber les charges extérieures (L).

2. Elément structurel selon la revendication 1, **caractérisé en ce que** des introductions de forces extérieures (L) sont réalisées à l'aide de déformations LFT (32) et/ou avec des déformations de profilés EF appropriées (22).

3. Elément structurel selon la revendication 1, **caractérisé en ce que** les points d'intersection (50) tridimensionnels sont conçus en forme de "X", de "T" ou de "L".

4. Elément structurel selon la revendication 1, **caractérisé en ce que** les profilés EF au point d'intersection (50) sont disposés de telle manière que les profilés EF (10) peuvent être posés les uns après les autres ou les uns avec les autres dans un outil de formage LFT, puis comprimés avec une masse LFT fondue chargée (6) dans une presse LFT au cours d'une étape et pour former un élément monobloc.

5. Elément structurel selon la revendication 1, **caractérisé en ce que** les profilés EF (10) sont constitués de couches avec des orientations de fibres différentes.

6. Elément structurel selon la revendication 1, **caractérisé en ce que** la masse LFT (6') présente une longueur de fibre moyenne d'au moins 3 mm.

7. Elément structurel selon la revendication 1, **caractérisé en ce que** les profilés EF (10) comportent un renfort par filaments continus (EF) en fibres de verre, de carbone ou d'aramide.

8. Elément structurel selon la revendication 1, **caractérisé en ce que** la matière thermoplastique de la masse LFT (6) et des profilés EF (10) est constituée de polymères semi-cristallins tels que le PP, le PET, le PBT, le PA.

9. Elément structurel selon la revendication 1, **caractérisé en ce que** les profilés EF (10) présentent un profilage tridimensionnel.

10. Elément structurel selon la revendication 1, **caractérisé en ce que** les profilés EF (10.1 - 10.6) présentent une flexion, une torsion, un plissement et/ou une structuration de surface dans le sens longitudinal.

11. Elément structurel selon la revendication 1, **caractérisé en ce que** les profilés EF (10) présentent des formes différentes en section transversale.

12. Elément structurel selon la revendication 1, **caractérisé en ce que** des déformations (22) sont créées dans les profilés EF et des déformations (32) sont créées dans la masse LFT pour des introductions de forces et de transitions de force entre les profilés EF (10) et la masse LFT (6) ainsi vers les inserts (4).

13. Elément structurel selon la revendication 1, **caractérisé en ce qu'**un profilé EF (10) est formé avec un épaulement de positionnement (55), une zone épaisse de traction et de pression en haut et en bas (56) ainsi qu'une zone de poussée plus mince (57) entre celles-ci et le profilé EF est positionné dans une nervure (8) ou dans une paroi à moulures (7) de l'élément structurel.

14. Elément structurel selon la revendication 1, **caractérisé en ce que** les profilés EF (10) forment une "structure moment-levier de charge" avec un point d'intersection tridimensionnel en forme de "T" ou en forme de "L".

15. Elément structurel selon la revendication 1, **caractérisé en ce qu'**il forme un dossier de siège individuel (72) avec attache de ceinture (60).

16. Elément structurel selon la revendication 1, **caractérisé en ce qu'**il forme un dossier de siège arrière de deux-tiers (74) avec attache de ceinture (60) et serrure de blocage (58).

17. Elément structurel selon la revendication 1, **caractérisé en ce qu'**il forme une coque de siège (76) ou un plancher de cabine.

18. Elément structurel selon la revendication 1, **caractérisé en ce qu'**il forme une structure porteuse de porte d'automobile (78) avec une protection intégrée contre les chocs latéraux.

19. Elément structurel selon la revendication 1, **caractérisé en ce qu'**il est constitué de plusieurs parties (82), par exemple de deux coques 1, 1.2.

20. Procédé destiné à la fabrication d'un élément structurel selon la revendication 1, dans lequel
plusieurs profilés EF moulés (10) sont posés les uns après les autres ou les uns avec les autres dans un outil de formage LFT où ils sont positionnés dans une position prédéterminée pour former un point d'intersection (50) tridimensionnel, puis une masse LFT fondue (6) est chargée et comprimée avec les profilés EF (10) au cours d'une étape pour former un élément monobloc.
